(19) Europäisches Patentamt
European Patent Office
Office européen des brevets

(11) EP 2 363 383 A1

(12) **EUROPEAN PATENT APPLICATION**
published in accordance with Art. 153(4) EPC

(43) Date of publication:
**07.09.2011 Bulletin 2011/36**

(21) Application number: **09824791.9**

(22) Date of filing: **04.11.2009**

(51) Int Cl.:
***C03C 17/34*** *(2006.01)* ***B32B 17/04*** *(2006.01)*
***C03C 17/32*** *(2006.01)* ***G09F 9/30*** *(2006.01)*

(86) International application number:
**PCT/JP2009/068830**

(87) International publication number:
**WO 2010/053092 (14.05.2010 Gazette 2010/19)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **07.11.2008 JP 2008286164**
**14.05.2009 JP 2009117226**
**10.06.2009 JP 2009138875**

(71) Applicant: **Nitto Denko Corporation**
**Ibaraki-shi, Osaka 567-8680 (JP)**

(72) Inventors:
- **HATTORI, Daisuke**
**Ibaraki-shi**
**Osaka 567-8680 (JP)**
- **MURASHIGE, Takeshi**
**Ibaraki-shi**
**Osaka 567-8680 (JP)**
- **SAKATA, Yoshimasa**
**Ibaraki-shi**
**Osaka 567-8680 (JP)**
- **YAMAOKA, Takashi**
**Ibaraki-shi**
**Osaka 567-8680 (JP)**
- **NAGATSUKA, Tatsuki**
**Ibaraki-shi**
**Osaka 567-8680 (JP)**

(74) Representative: **HOFFMANN EITLE**
**Patent- und Rechtsanwälte**
**Arabellastraße 4**
**81925 München (DE)**

# (54) TRANSPARENT SUBSTRATE AND METHOD FOR PRODUCTION THEREOF

(57) There is provided a transparent substrate which can be reduced in thickness, which is excellent in adhesiveness between an inorganic glass and a resin layer under a high-temperature and high-humidity environment, bending property, flexibility, and impact resistance, and which significantly prevents the progress of a crack in a glass.

A transparent substrate according to an embodiment of the present invention includes: an inorganic glass; and a resin layer, which is obtained by applying a solution of a thermoplastic resin onto one side or both sides of the inorganic glass, wherein: the solution comprises a first thermoplastic resin having a hydroxy group at a terminal; the inorganic glass and the resin layer comprise an epoxy group-terminated coupling agent layer therebetween; the coupling agent layer is directly formed on the inorganic glass; and the resin layer is directly formed on the coupling agent layer.

FIG.1

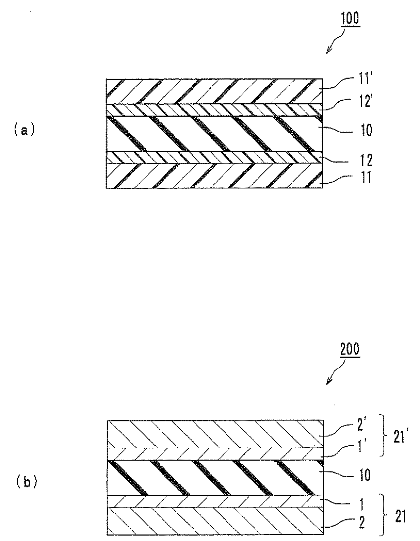




Printed by Jouve, 75001 PARIS (FR)

## Description

### Technical Field

The present invention relates to a transparent substrate and a manufacturing method therefor. More specifically, the present invention relates to a transparent substrate which can be reduced in thickness, which is excellent in adhesiveness between an inorganic glass and a resin layer under a high-temperature and high-humidity environment, bending property, flexibility, and impact resistance, and which significantly prevents the progress of a crack in a glass.

### Background Art

In recent years, reductions in weight and thickness of a display apparatus such as a flat panel display (FPD: a liquid crystal display apparatus or an organic EL display apparatus, for example) have been advanced through the development of a visual communication technology. A glass substrate has hitherto been used as a substrate for the display apparatus in many cases. The glass substrate is excellent in transparency, solvent resistance, gas barrier property, and heat resistance. However, when one attempts to reduce the thickness of a glass material for forming the glass substrate, the glass substrate is reduced in weight and simultaneously exhibits excellent flexibility, but there arises a problem in that the glass substrate becomes difficult to handle because of its insufficient impact resistance.

There is disclosed a flexible substrate having a resin layer formed on a surface of a glass substrate for the purpose of providing a thin glass substrate having improved handleability (for example, Patent Documents 1 and 2). In general, a forming method for the resin layer to be used in such flexible substrate may be, for example, a method including directly applying a thermosetting resin or a UV curable resin onto a glass and then hardening the resin, or a method including attaching a thermoplastic resin via a pressure-sensitive adhesive or an adhesive. However, those methods are insufficient for reinforcing a glass from the viewpoints described below. First, in the case of using a thermosetting resin or a UV curable resin, the rupture of the resin itself occurs together with the rupture of a glass because the resin is generally very brittle. Hence, an effect of suppressing the fracture of a glass is small. Second, in the case of attaching a thermoplastic resin with a pressure-sensitive adhesive or an adhesive, although the thermoplastic resin is very tough, the pressure-sensitive adhesive or the adhesive interferes with glass reinforcement, with the result that it is impossible to sufficiently reinforce a glass. Further, the above-mentioned methods also provide insufficient adhesiveness between a glass substrate and a resin layer. Such adhesiveness-related problem becomes particularly remarkable in a manufacturing process for a display element which requires high reliability for adhesiveness under a high-temperature and high-humidity environment. Those problems also exist in a substrate for a solar cell and a substrate for an illumination element. Accordingly, there is a demand for a transparent substrate excellent in adhesiveness between a glass substrate and a resin layer, bending property, and impact resistance.

### Citation List

#### Patent Documents

[Patent Document 1] JP 11-329715 A
[Patent Document 2] JP 2008-107510 A

### Summary of the Invention

#### Problems to be solved by the Invention

The present invention has been made for solving the above-mentioned conventional problems, and a main object of the present invention is to provide a transparent substrate which can be reduced in thickness, which is excellent in adhesiveness between an inorganic glass and a resin layer under a high-temperature and high-humidity environment, bending property, flexibility, and impact resistance, and which significantly prevents the progress of a crack in a glass.

#### Means for Solving the Problems

A transparent substrate according to an embodiment of the present invention includes: an inorganic glass; and a resin layer, which is obtained by applying a solution of a thermoplastic resin onto one side or both sides of the inorganic glass, wherein: the solution comprises a first thermoplastic resin having a hydroxy group at a terminal; the inorganic

glass and the resin layer comprise an epoxy group-terminated coupling agent layer therebetween; the coupling agent layer is directly formed on the inorganic glass; and the resin layer is directly formed on the coupling agent layer.
A transparent substrate according to another embodiment of the present invention includes: an inorganic glass; a resin layer, which is obtained by applying a solution of a thermoplastic resin onto one side or both sides of the inorganic glass, wherein: the resin layer includes: a first thermoplastic resin layer, which is obtained by applying a first casting solution comprising a first thermoplastic resin having a hydroxy group at a terminal and an epoxy group-terminated coupling agent onto the inorganic glass; and a second thermoplastic resin layer, which is obtained by applying a second casting solution comprising a second thermoplastic resin onto the first thermoplastic resin layer.
In a preferred embodiment, the hydroxy group includes a phenolic hydroxy group.
In a preferredembodiment, the first thermoplastic resin having a hydroxy group at a terminal includes a thermoplastic resin obtained by modifying a terminal of at least one kind selected from the group consisting of polyimide, polyamide-imide, polyethersulfone, polyetherimide, polysulfone, polyarylate, and polycarbonate with a hydroxy group.
In a preferred embodiment, the transparent substrate has a total thickness of 150 μm or less.
In a preferred embodiment, the inorganic glass has a thickness of 100 μm or less.
In a preferred embodiment, the first thermoplastic resin having a hydroxy group at a terminal has a glass transition temperature of 150°C to 350°C.
In a preferred embodiment, the first thermoplastic resin having a hydroxy group at a terminal has a weight average molecular weight of $2.0 \times 10^4$ to $150 \times 10^4$ in terms of polyethylene oxide.
In a preferred embodiment, the resin layer has a modulus of elasticity at 25°C of 1 GPa or more.
In a preferred embodiment, the resin layer has a fracture toughness value at 25°C of 1 $MPa \cdot m^{1/2}$ to 10 $MPa \cdot m^{1/2}$.
In a preferred embodiment, the transparent substrate has a rupture diameter, which is determined when the transparent substrate is cracked and bent, of 50 mm or less.
In a preferred embodiment, a content of the epoxy group-terminated coupling agent is 10 parts by weight to 50 parts by weight with respect to 100 parts by weight of the first thermoplastic resin.
In a preferred embodiment, the first casting solution further comprises a cyclic ether compound and/or a compound obtained by ring-opening a cyclic moiety of a cyclic ether compound; and a content of the cyclic ether compound and/or the compound obtained by ring-opening a cyclic moiety of a cyclic ether compound is 5 parts by weight to 50 parts by weight with respect to 100 parts by weight of the first thermoplastic resin.
In a preferred embodiment, the first thermoplastic resin layer has a thickness of 20 μm or less.
In a preferred embodiment, the second thermoplastic resin has a glass transition temperature of 150°C to 350°C.
In a preferred embodiment, the second thermoplastic resin layer has a modulus of elasticity at 25°C of 1.5 GPa to 10 GPa.
In a preferred embodiment, the second thermoplastic resin layer has a fracture toughness value at 25°C of 1.5 $MPa \cdot m^{1/2}$ to 10 $MPa \cdot m^{1/2}$.
According to another aspect of the present invention, a display element is provided. The display element is produced using the above-described transparent substrate.
According to still another aspect of the present invention, a solar cell is provided. The solar cell is produced using the above-described transparent substrate.
According to still another aspect of the present invention, an illumination element is provided. The illumination element is produced using the above-described transparent substrate.
According to still another aspect of the present invention, a manufacturing method for a transparent substrate is provided. The method includes the steps of: subj ecting a surface of an inorganic glass to coupling treatment with an epoxy group-terminated coupling agent; and applying a solution comprising a thermoplastic resin having a hydroxy group at a terminal onto the surface of the inorganic glass thus subjected to the coupling treatment to form a resin layer.

## Advantageous Effects of Invention

According to the present invention, the transparent substrate which can be reduced in thickness, which is excellent in adhesiveness between an inorganic glass and a resin layer under a high-temperature and high-humidity environment, bending property, flexibility, and impact resistance, and which significantly prevents the progress of a crack in a glass can be provided by using the thermoplastic resin having a hydroxy group at the terminal and the epoxy group-terminated coupling agent in combination.

## Brief Description of Drawings

[FIGS. **1**] FIG. **1 (a)** is a schematic cross-sectional view illustrating a transparent substrate according to a preferred embodiment of the present invention. FIG. **1(b)** is a schematic cross-sectional view illustrating a transparent substrate according to another preferred embodiment of the present invention.

Description of Embodiments

A. Entire configuration of transparent substrate

FIG. **1(a)** is a schematic cross-sectional view illustrating a transparent substrate according to a preferred embodiment of the present invention. A transparent substrate **100** in the figure includes an inorganic glass **10** and resin layers **11** and **11'** placed on one side or both sides (preferably both sides as illustrated in the figure) of the inorganic glass **10,** and further includes epoxy group-terminated coupling agent layers **12** and **12'** between the inorganic glass **10** and each of the resin layers **11** and **11'.**

As illustrated in FIG. **1(a),** it is preferred that the above-mentioned epoxy group-terminated coupling agent layers **12** and **12'** be formed onto the above-mentioned inorganic glass **10** directly (that is, not via an adhesive or a pressure-sensitive adhesive). Further, as illustrated in FIG. **1(a)**, it is preferred that the above-mentioned resin layers **11** and **11'** be formed onto the above-mentioned epoxy group-terminated coupling agent layers **12** and **12'** directly (that is, not via an adhesive or a pressure-sensitive adhesive). In such configuration, the resin layers **11** and **11'** may adhere more strongly onto the inorganic glass **10** (inorganic glass having a coupling agent layer) as compared to the case where the resin layers are provided on the inorganic glass **10** via an adhesive or a pressure-sensitive adhesive. Hence, a transparent substrate which is excellent in dimensional stability and which hardly causes the progress of a crack during cutting may be obtained.

It is preferred that the above-mentioned epoxy group-terminated coupling agent layers **12** and **12'** be chemically bonded (typically, covalently bonded) to the inorganic glass **10.** Such chemical bond may result in the provision of a transparent substrate excellent in adhesiveness between the above-mentioned inorganic glass **10** and each of the above-mentioned epoxy group-terminated coupling agent layers **12** and **12',**

Presumably, the above-mentioned resin layers **11** and **11'** are bonded to or interact with the above-mentioned epoxy group-terminated coupling agent layers **12** and **12'** through a chemical bond (typically, a covalent bond). Probably for this reason, a transparent substrate excellent in adhesiveness between the above-mentioned epoxy group-terminated coupling agent layers **12** and **12'** and the above-mentioned resin layers **11** and **11'** may be obtained.

FIG. **1(b)** is a schematic cross-sectional view illustrating a transparent substrate according to another preferred embodiment of the present invention. A transparent substrate **200** in the figure has an inorganic glass **10** and resin layers **21** and **21'** placed on one side or both sides (preferably both sides as illustrated in the figure), respectively, of the inorganic glass **10.** The resin layers **21** and **21'** have first thermoplastic resin layers **1** and **1'** and second thermoplastic resin layers **2** and **2' ,** respectively.

As illustrated in FIG. **1(b),** it is preferred that the first thermoplastic resin layers **1** and **1'** be formed on the inorganic glass **10 directly** (that is, not via an adhesive or a pressure-sensitive adhesive), and the second thermoplastic resin layers **2** and **2'** be further formed on the first thermoplastic resin layers **1** and **1'**, respectively, directly (that is, not via an adhesive or a pressure-sensitive adhesive). Such formation of resin layers **21** and **21'** that the first thermoplastic resin layers **1** and **1',** each of which is obtained by applying a first casting solution including a first thermoplastic resin having a hydroxy group at the terminal and an epoxy group-terminated coupling agent, are directly formed on the inorganic glass **10** affords a transparent substrate which is excellent in adhesiveness between an inorganic glass and a resin layer even under a high-temperature and high-humidity environment and which hardly causes the progress of a crack during cutting as compared to the case where a resin layer is formed on an inorganic glass via an adhesive or a pressure-sensitive adhesive.

It is preferred that the epoxy group-terminated coupling agent included in the above-mentioned first casting solution be chemically bonded (typically, covalently bonded) to the inorganic glass **10.** Such chemical bond may result in the provision of a transparent substrate excellent in adhesiveness between the above-mentioned inorganic glass **10** and each of the above-mentioned first thermoplastic resin layers 1 and **1'**.

The transparent substrate of the present invention may include any appropriate other layer as an outermost layer, if required. Examples of the above-mentioned other layer include a hard coat layer and a transparent conductive layer.

The total thickness of the above-mentioned transparent substrate may be set to any appropriate value depending on the configuration. The total thickness is preferably 150 $\mu$m or less, more preferably 140 $\mu$m or less, particularly preferably 80 $\mu$m to 130 $\mu$m. According to the present invention, a resin layer may be provided as described above to markedly reduce the thickness of an inorganic glass as compared to a conventional glass substrate. That is, the resin layer may contribute to improvements in impact resistance and toughness even when it has a small thickness, and hence provides a transparent substrate which has reduced weight and thickness and which has excellent impact resistance. The thicknesses of the inorganic glass and the resin layer are described later.

The above-mentioned transparent substrate has a rupture diameter, which is determined when the transparent substrate is cracked and bent, of preferably 50 mm or less, more preferably 40 mm or less. The transparent substrate of the present invention includes a specific resin layer and thus exhibits excellent flexibility (for example, a rupture

diameter in the above-mentioned range).

The above-mentioned transparent substrate has a haze value of preferably 10% or less, more preferably 5% or less. A transparent substrate having such characteristic provides satisfactory visibility when being used in, for example, a display element.

The above-mentioned transparent substrate has a transmittance at a wavelength of 550 nm of preferably 80% or more, more preferably 85% or more. The above-mentioned transparent substrate preferably has a rate of reduction in light transmittance after heat treatment at 180°C for 2 hours of 5% or less. This is because a transparent substrate having such rate of reduction can ensure a practically acceptable light transmittance even when being heat-treated required in a manufacturing process for a flat panel display.

The above-mentioned transparent substrate has a surface roughness Ra (substantially, the above-mentioned resin layer or the above-mentioned other layer has a surface roughness Ra) of preferably 50 nm or less, more preferably 30 nm or less, particularly preferably 10 nm or less. The above-mentioned transparent substrate has a waviness of preferably 0.5 μm or less, more preferably 0.1 μm or less. A transparent substrate having such characteristic is excellent in quality. It should be noted that such characteristic may be achieved, for example, by a manufacturing method described later.

The above-mentioned transparent substrate has a coefficient of linear expansion of preferably 15 ppm/°C or less, more preferably 10 ppm/°C or less, particularly preferably 1 ppm/°C to 10 ppm/°C. The above-mentioned transparent substrate includes the above-mentioned inorganic glass and thus exhibits excellent dimensional stability (for example, a coefficient of linear expansion in the above-mentioned range). More specifically, the above-mentioned inorganic glass itself is rigid and the above-mentioned resin layer is restricted by the inorganic glass, which allows the dimension variation of the resin layer as well to be suppressed. As a result, the above-mentioned transparent substrate exhibits excellent dimensional stability as a whole. For example, in the case where the transparent substrate of the present invention is used in a display element, pixel misalignment and wiring rupture and fissure hardly occur even when the transparent substrate is subjected to a plurality of heat treatment steps.

B. Inorganic glass

Any appropriate plate-like inorganic glass may be employed as the inorganic glass to be used in the transparent substrate of the present invention. Examples of the above-mentioned inorganic glass include a soda-lime glass, a borate glass, an aluminosilicate glass, and a quartz glass according to the classification based on a composition. Further examples thereof include a non-alkaline glass and a low alkaline glass according to the classification based on an alkali component. In the above-mentioned inorganic glass, the content of an alkali metal component (for example, $Na_2O$, $K_2O$, or $Li_2O$) is preferably 15 wt% or less, more preferably 10 wt% or less.

The above-mentioned inorganic glass has a thickness of preferably 100 μm or less, more preferably 20 μm to 90 μm, particularly preferably 30 μm to 80 μm. In the present invention, a resin layer may be provided on one side or both sides of the inorganic glass to reduce the thickness of the inorganic glass.

The above-mentioned inorganic glass has a transmittance at a wavelength of 550 nm of preferably 85% or more. The above-mentioned inorganic glass has a refractive index $n_g$ at a wavelength of 550 nm of preferably 1.4 to 1.65.

The above-mentioned inorganic glass has a density of preferably 2.3 $g/cm^3$ to 3.0 $g/cm^3$, more preferably 2.3 $g/cm^3$ to 2.7 $g/cm^3$. An inorganic glass having a density in the above-mentioned range provides a transparent substrate having a reduced weight.

Any appropriate molding method may be employed as a molding method for the above-mentioned inorganic glass. Typically, the above-mentioned inorganic glass is produced by melting a mixture including a main raw material such as silica or alumina, an antifoaming agent such as a salt cake or antimony oxide, and a reducing agent such as carbon at a temperature of 1,400°C to 1,600°C and molding the resultant into a thin plate shape, followed by cooling. A molding method for a thin plate of the above-mentioned inorganic glass is, for example, a slot down-draw method, a fusion method, or a float method. An inorganic glass molded into a plate shape by each of those methods may be chemically polished with a solvent such as hydrofluoric acid, if required, in order to provide a thiner plate and enhance smoothness.

A commercially available inorganic glass itself may be used as the above-mentioned inorganic glass. Alternatively, a commercially available inorganic glass polished so as to have a desired thickness may also be used. Examples of the commercially available inorganic glass include "7059", "1737" or "EAGLE2000" manufactured by Corning Incorporated, "AN100" manufactured by Asahi Glass Co. , Ltd., "NA-35" manufactured by NH Techno Glass Corporation, "OA-10" manufactured by Nippon Electric Glass Co., Ltd., and "D263" or "AF45" manufactured by SCHOTT AG.

C. Resin layer

In one embodiment, as illustrated in FIG. **1(a),** a resin layer to be used in the transparent substrate of the

present invention is provided on one side or both sides of the above-mentioned inorganic glass via an epoxy group-terminated coupling agent layer. The resin layer is obtained by applying a solution of a first thermoplastic resin having a hydroxy group at the terminal onto one side or both sides of the above-mentioned inorganic glass.

In another embodiment, as illustrated in FIG. **1(b),** a resin layer to be used in the transparent substrate of the present invention includes a first thermoplastic resin layer and a second thermoplastic resin layer. The above-mentioned first thermoplastic resin layer is obtained by applying a first casting solution including the above-mentioned first thermoplastic resin having a hydroxy group at the terminal and an epoxy group-terminated coupling agent onto the above-mentioned inorganic glass. The second thermoplastic resin layer is obtained by applying a second casting solution onto each first thermoplastic resin layer.

The above-mentioned resin layer has a light transmittance at a wavelength of 550 nm of preferably 80% or more. The above-mentioned resin layer has a refractive index ($n_r$) at a wavelength of 550 nm of preferably 1.3 to 1.7.

The above-mentioned resin layer has a modulus of elasticity at 25°C of preferably 1 GPa or more, more preferably 1.5 GPa or more. As long as the modulus of elasticity is set to fall within the above-mentioned range, even when the inorganic glass is reduced in thickness, the resin layer alleviates a local stress in a direction in which the inorganic glass is torn toward a defect at the time of deformation. Accordingly, the inorganic glass hardly cracks or ruptures.

The above-mentioned resin layer has a fracture toughness value at 25°C of preferably 1 $MPa \cdot m^{1/2}$ to 10 $MPa \cdot m^{1/2}$, more preferably 2 $MPa \cdot m^{1/2}$ to 6 $MPa \cdot m^{1/2}$.

The above-mentioned resin layer preferably has chemical resistance. Specifically, the resin layer preferably has chemical resistance to a solvent to be used in a washing step and the like during the production of a display element. The solvent to be used in a washing step and the like during the production of a display element is, for example, acetone.

The above-mentioned resin layer has a thickness of preferably 1 $\mu$m to 60 $\mu$m, more preferably 1 $\mu$m to 40 $\mu$m.

When the above-mentioned resin layers are placed on both sides of the above-mentioned inorganic glass, the respective resin layers may have the same or different thicknesses. The respective resin layers preferably have the same thickness. In addition, the respective resin layers may be formed of the same thermoplastic resin, or may be formed of different thermoplastic resins. It is preferred that the respective resin layers be formed of the same thermoplastic resin. Thus, it is most preferred that the respective resin layers be formed of the same thermoplastic resin so as to have the same thickness. In such configuration, a heat stress is uniformly applied on both surfaces of the inorganic glass even in the case of carrying out heat treatment, and hence warping and waviness are very hard to occur.

The above-mentioned resin layer may further contain any appropriate additive depending on purposes. Examples of the above-mentioned additive include a diluent, an antioxidant, a denaturant, surfactant, a dye, a pigment, a discoloration inhibitor, a UV absorber, a softener, a stabilizer, a plasticizer, an antifoaming agent, and a reinforcing agent. The kind, number, and amount of additives contained in a resin composition may be appropriately set depending on purposes.

C-1. First thermoplastic resin having hydroxy group at terminal

The above-mentioned first thermoplastic resin having a hydroxy group at the terminal may be used to provide a resin layer which is excellent in adhesiveness to an inorganic glass even under a high-temperature and high-humidity environment and which is also excellent in toughness. Such resin layer excellent in toughness may be used to provide a transparent substrate which hardly causes the progress of a crack during cutting. Further, when the above-mentioned resin layer includes the first thermoplastic resin having a hydroxy group at the terminal, and when the transparent substrate of the present invention includes an epoxy group-terminated coupling agent layer between the above-mentioned inorganic glass and the above-mentioned resin layer, the above-mentioned resin layer can strongly adhere to the epoxy group-terminated coupling agent layer. This is presumably because the above-mentioned hydroxy group and an epoxy group in the above-mentioned epoxy group-terminated coupling agent may react with each other to form a chemical bond or interact with each other. As a result, coupled with strong adhesiveness between the above-mentioned epoxy group-terminated coupling agent layer and the above-mentioned inorganic glass, a transparent substrate in which the above-mentioned first thermoplastic resin having a hydroxy group at the terminal strongly adheres to the above-mentioned inorganic glass (inorganic glass provided with the epoxy group-terminated coupling agent layer) may be obtained. Further, such resin layer excellent in adhesiveness to an inorganic glass is strongly restricted by the inorganic glass and thus provides a small dimension variation. As a result, a transparent substrate including the above-mentioned resin layer exhibits excellent dimensional stability.

Any appropriate thermoplastic resin having a hydroxy group at the terminal may be employed as the above-mentioned first thermoplastic resin having a hydroxy group at the terminal. Specific examples of the above-mentioned first thermoplastic resin include thermoplastic resins obtained by modifying terminals of polyimide, polyimide-amide, polyethersulfone, polyetherimide, polysulfone, polyarylate, polycarbonate, and the like with hydroxy groups. Those thermoplastic resins may be used alone or in combination. Such thermoplastic resin may be used to provide a resin layer which is excellent in adhesiveness to the above-mentioned inorganic glass or the above-mentioned epoxy group-terminated coupling agent layer even under a high-temperature and high-humidity environment and which is also excellent in toughness. Such resin layer excellent in toughness may be used to provide a transparent substrate which hardly causes the progress of a crack during cutting. It should be noted that any appropriate method may be used for the above-mentioned modification of the terminals with hydroxy groups.

The content of the above-mentioned first thermoplastic resin having a hydroxy group at the terminal is preferably 80 parts by weight to 100 parts by weight, more preferably 90 parts by weight to 100 parts by weight, particularly preferably 100 parts by weight with respect to 100 parts by weight of the thermoplastic resin included in the solution of the first thermoplastic resin.

The above-mentioned first thermoplastic resin having a hydroxy group at the terminal has a polymerization degree of preferably 90 to 6,200, more preferably 130 to 4, 900, particularly preferably 150 to 3,700.

The above-mentioned first thermoplastic resin having a hydroxy group at the terminal has a weight average molecular weight of preferably $2.0 \times 10^4$ to $150 \times 10^4$, more preferably $3 \times 10^4$ to $120 \times 10^4$, particularly preferably $3.5 \times 10^4$ to $90 \times 10^4$ in terms of polyethylene oxide. When the above-mentioned thermoplastic resin having a hydroxy group at the terminal has a weight average molecular weight of less than $2.0 \times 10^4$, the above-mentioned thermoplastic resin layer is insufficient in toughness and hence may not exhibit a sufficient effect of reinforcing an inorganic glass. When the above-mentioned thermoplastic resin having a hydroxy group at the terminal has a weight average molecular weight of more than $150 \times 10^4$, a viscosity becomes excessively high, which may deteriorate handleability.

The above-mentioned first thermoplastic resin having a hydroxy group at the terminal has a glass transition temperature of 150°C to 350°C, preferably 180°C to 320°C, more preferably 210°C to 290°C. A first thermoplastic resin having a glass transition temperature in such range may be used to provide a transparent substrate excellent in heat resistance.

The above-mentioned hydroxy group is preferably a phenolic hydroxy group. When the transparent substrate of the present invention includes an epoxy group-terminated coupling agent layer between the above-mentioned inorganic glass and the above-mentioned resin layer, a thermoplastic resin having a phenolic hydroxy group may be used to allow the above-mentioned resin layer to strongly adhere to the above-mentioned epoxy group-terminated coupling agent layer.

The content of the above-mentioned hydroxy group is preferably 0.3 or more, more preferably 0.5 to 2.0 with respect to a polymerization degree of 100 of the first thermoplastic resin having a hydroxy group at the terminal. As long as the content of the hydroxy group falls within such range, a thermoplastic resin excellent in reactivity with the above-mentioned epoxy group-terminated coupling agent may be obtained.

A commercially available thermoplastic resin having a hydroxy group at the terminal may be used as the above-mentioned first thermoplastic resin having a hydroxy group at the terminal. The commercially available thermoplastic resin having a hydroxy group at the terminal is, for example, "SUMIKAEXCEL 5003P" manufactured by Sumitomo Chemical Co., Ltd.

C-2. First thermoplastic resin layer and second thermoplastic resin layer

In an embodiment in which the above-mentioned resin layer includes a first thermoplastic resin layer and a second thermoplastic resin layer, the first thermoplastic resin layer and the second thermoplastic resin layer are each laminated onto one surface or both surfaces of an inorganic glass in the stated order.

C-2-1. First thermoplastic resin layer

The above-mentioned first thermoplastic resin layer is obtained by applying a first casting solution including the above-mentioned first thermoplastic resin having a hydroxy group at the terminal and epoxy group-terminated coupling agent onto the above-mentioned inorganic glass.

The thermoplastic resin having a hydroxy group at the terminal as described above may be used as the first thermoplastic resin having a hydroxy group at the terminal included in the above-mentioned first casting solution.

The above-mentioned first casting solution includes an epoxy group-terminated coupling agent. It is presumed that an epoxy group in the above-mentioned epoxy group-terminated coupling agent may form a chemical bond with or interact with the above-mentioned first thermoplastic resin. Further, a silyl group in the above-mentioned epoxy group-terminated coupling agent may form a chemical bond with a substituent (for example, a hydroxy group) of the above-mentioned inorganic glass. Hence, the first thermoplastic resin layer is also excellent in adhesiveness to the above-mentioned inorganic glass. As a result, the transparent substrate of the present invention has improved adhesiveness between an inorganic glass and a first thermoplastic resin layer and also has excellent adhesiveness even under a high-temperature and high-humidity environment.

Any appropriate epoxy group-terminated coupling agent may be used as the epoxy group-terminated coupling agent included in the above-mentioned first casting solution. Specific examples thereof include 2-(3,4-epoxycyclohexyl) ethyltrimethoxysilane, 3-glycidoxypropyltrimethoxysilane, 3-glycidoxypropylmethyldiethoxysilane, and 3-glycidoxypropyltriethoxysilane.

A commercially available epoxy group-terminated coupling agent may be used as the epoxy group-terminated coupling agent included in the above-mentioned first casting solution. Examples of the commercially available epoxy group-terminated coupling agent include products manufactured by Shin-Etsu Chemical Co., Ltd. under the trade name "KBM-303" (2-(3,4-epoxycyclohexyl)ethyltrimethoxysilane), the trade name "KBM-403" (3-glycidoxypropyltrimethoxysilane), the trade name "KBE-402" (3-glycidoxypropylmethyldiethoxysilane), and the trade name "KBE-403" (3-glycidoxypropyltriethoxysilane).

The content of the epoxy group-terminated coupling agent included in the above-mentioned first casting solution is preferably 10 parts by weight to 50 parts by weight, more preferably 15 parts by weight to 40 parts by weight, even more preferably 20 parts by weight to 35 parts by weight with respect to 100 parts by weight of the first thermoplastic resin. When the content of the epoxy group-terminated coupling agent is set to fall within the above-mentioned range, adhesiveness between an inorganic glass and a resin layer may be sufficiently improved. In addition, a transparent substrate having a desired haze value is obtained even in the case of increasing the total thickness of the transparent substrate.

The above-mentioned first thermoplastic resin layer has a transmittance at a wavelength of 550 nm of preferably 80% or more. The above-mentioned first thermoplastic resin layer has a refractive index ($n_r$) at a wavelength of 550 nm of preferably 1.3 to 1.7.

The above-mentioned first thermoplastic resin layer has a modulus of elasticity at 25°C of preferably 1 GPa or more, more preferably 1.5 GPa or more. As long as the modulus of elasticity is set to fall within the above-mentioned range, even when an inorganic glass is reduced in thickness, the resin layer alleviates a local stress in a direction in which the inorganic glass is torn toward a defect at the time of deformation. Accordingly, the inorganic glass hardly cracks or ruptures.

The above-mentioned first thermoplastic resin layer has a fracture toughness rate at 25°C of preferably 1 $MPa \cdot m^{1/2}$ to 10 $MPa \cdot m^{1/2}$, more preferably 2 $MPa \cdot m^{1/2}$ to 6 $MPa \cdot m^{1/2}$.

The above-mentioned first thermoplastic resin layer has a thickness of preferably 20 μm or less. When the thickness of the first thermoplastic resin layer is set to fall within the above-mentioned range, sufficient adhesiveness between an inorganic glass and a second thermoplastic resin layer is obtained even under a high-temperature and high-humidity environment. The first thermoplastic resin layer has a thickness of more preferably 0.001 μm to 20 μm, even more preferably 0.001 μm to 15 μm, particularly preferably 0.01 μm to 10 μm. When the thickness falls within the above-mentioned preferred range, a transparent substrate satisfying sufficient transparency may be obtained.

C-2-2. Second thermoplastic resin layer

The above-mentioned second thermoplastic resin layer is obtained by applying a second casting solution onto a first thermoplastic resin layer. The second casting solution includes a second thermoplastic resin. The second thermoplastic resin layer may be a single layer or may be a plurality of layers. When the second thermoplastic resin layer is a plurality of layers, the plurality of layers may be formed of the same resin composition or may be formed of different resin compositions.

Any appropriate thermoplastic resin may be used as the above-mentioned second thermoplastic resin as long as exhibiting compatibility with the above-mentioned first thermoplastic resin. Specific examples thereof include a polyethersulfone-based resin, a polycarbonate-based resin, an epoxy-based resin, an acrylic resin, a polyester-based resin such as polyethylene terephthalate or polyethylene naphthalate, a polyolefin-based resin, a cycloolefin-based resin such as a norbornene-based resin, a polyimide-based resin, a polyamide-based resin, a polyimide-amide-based resin, a polyarylate-based resin, a polysulfone-based resin, and a polyetherimide-based resin.

The above-mentioned second thermoplastic resin has a glass transition temperature of preferably 150°C to 350°C, more preferably 170°C to 330°C, even more preferably 190°C to 300°C. As long as the glass transition temperature falls within such range, a transparent substrate excellent in heat resistance maybe obtained.

The above-mentioned second thermoplastic resin layer has a transmittance at a wavelength of 550 nm of preferably 80% or more. The above-mentioned second thermoplastic resin layer has a refractive index ($n_r$) at a wavelength of 550 nm of preferably 1.3 to 1.7.

The above-mentioned second thermoplastic resin layer has a modulus of elasticity at 25°C of preferably 1.5 GPa to 10 GPa, more preferably 1.8 GPa to 9 GPa, even more preferably 2 GPa to 8 GPa. As long as the modulus of elasticity falls within such range, even when an inorganic glass is reduced in thickness, the second thermoplastic resin layer alleviates a local stress in a direction in which the inorganic glass is torn toward a defect at the time of deformation. Accordingly, the inorganic glass hardly cracks or ruptures.

The above-mentioned second thermoplastic resin layer has a fracture toughness value at 25°C of preferably 1.5 $MPa \cdot m^{1/2}$ to 10 $MPa \cdot m^{1/2}$, more preferably 2 $MPa \cdot m^{1/2}$ to 8 $MPa \cdot m^{1/2}$, particularly preferably 2.5 $MPa \cdot m^{1/2}$ to 6 $MPa \cdot m^{1/2}$. As long as the fracture toughness value falls within such range, the second thermoplastic resin included in

the second thermoplastic resin layer has a sufficient viscosity, which can prevent the progress of a crack and a rupture in an inorganic glass to provide a transparent substrate having satisfactory bending property. When the second thermoplastic resin layer has a fracture toughness value at 25°C of 1.5 $MPa \cdot m^{1/2}$ or more, high bending property may be achieved. In general, however, the upper limit value of the fracture toughness value is 10 $MPa \cdot m^{1/2}$

The above-mentioned second thermoplastic resin layer preferably has chemical resistance. Specifically, the second thermoplastic resin layer preferably has chemical resistance to a solvent to be used in a washing step and the like during the production of a display element. The solvent to be used in a washing step and the like during the production of a display element is, for example, acetone.

The above-mentioned second thermoplastic resin layer has a thickness of preferably 5 μm to 60 μm, more preferably 20 μm to 50 μm, even more preferably 20 μm to 40 μm.

When the above-mentioned second thermoplastic resin layers are placed on both sides of a transparent substrate, the second thermoplastic resin layers may have the same or different thicknesses. It is preferred that the second thermoplastic resin layers have the same thickness. It is particularly preferred that the second thermoplastic resin layers placed on both sides of an inorganic glass be formed so as to have the same composition and the same thickness. In such configuration, a heat stress is uniformly applied onto both surfaces of the inorganic glass even in the case of carrying out heat treatment, and hence warping and waviness are very hard to occur.

C-3. Other compounds contained

It is preferred that the above-mentioned resin layer further include an imidazole, a cyclic ether compound, and/or a compound obtained by ring-opening a cyclic moiety of a cyclic ether compound. The above-mentioned resin layer including such compound allows stable adhesion between the above-mentioned inorganic glass and the above-mentioned resin layer, and hence a transparent substrate may be obtained at a high yield. For example, when the above-mentioned inorganic glass and the above-mentioned resin layer include an epoxy group-terminated coupling agent layer therebetween, stable adhesion between the inorganic glass provided with the epoxy group-terminated coupling agent layer and the above-mentioned resin layer is attained. Further, when the resin layer includes a first thermoplastic resin layer and a second thermoplastic resin layer, stable adhesion between the first thermoplastic resin layer and the inorganic glass is attained.

The above-mentioned resin layer including an imidazole, a cyclic ether compound, and/or a compound obtained by ring-opening a cyclic moiety of a cyclic ether compound may be obtained by applying a solution of a first thermoplastic resin having a hydroxy group at the terminal supplemented with the compound onto an inorganic glass or an epoxy group-terminated coupling agent layer. That is, when the above-mentioned inorganic glass and the above-mentioned resin layer include the epoxy group-terminated coupling agent layer therebetween, the resin layer may be obtained by applying a solution of a first thermoplastic resin having a hydroxy group at the terminal supplemented with the compound onto an epoxy group-terminated coupling agent layer. Further, when the above-mentioned resin layer includes a first thermoplastic resin layer and a second thermoplastic resin layer, the layer may be obtained by applying a first casting solution including a first thermoplastic resin having a hydroxy group at the terminal supplemented with the compound and an epoxy group-terminated coupling agent onto an inorganic glass.

Examples of the above-mentioned imidazole include 2-methylimidazole, 2-undecylimidazole, 2-heptadecylimidazole, 1,2-dimethylimidazole, 2-ethyl-4-methylimidazole, 2-phenylimidazole, 2-phenyl-4-methylimidazole, 1-benzyl-2-methylimidazole, 1-benzyl-2-phenylimidazole, 1-cyanoethyl-2-methylimidazole, 1-cyanoethyl-2-undecylimidazole, 1-cyanoethyl-2-ethyl-4-methylimidazole, 1-cyanoethyl-2-phenylimidazole, an epoxy-imidazole adduct, 2,3-dihydro-1H-pyrrolo[1,2-a]benzimidazole, 1-dedecyl-2-methyl-3-benzylimidazolium chloride, 2-phenyl-4,5-dihydroxymethylimidazole, 2-phenyl-4-methyl-5-hydroxymethylimidazole, 1-cyanoethyl-2-undecylimidazolium trimellitate, 1-cyanoethyl-2-phenylimidazolium trimellitate, 2,4-diamino-6-[2'-methylimidazolyl-(1')]-ethyl-s-triazine, 2,4-diamino-6-[2'-undecylimidazolyl-(1')]-ethyl-s-triazine, and 2,4-diamino-6-[2'-ethyl-4'-methylimidazolyl-(1')]-ethyl-s-tria zine.

Any appropriate cyclic ether compound may be used as the above-mentioned cyclic ether compound. Examples thereof include cyclic ether compounds each having a four-membered ring such as oxetanes, cyclic ether compounds each having a five-membered ring such as tetrahydrofurans, cyclic ether compounds each having a six-membered ring such as tetrahydropyrans, and epoxies. Any appropriate ring-opened cyclic ether compound may be used as the compound obtained by ring-opening a cyclic moiety of a cyclic ether compound. The ring-opened cyclic ether compound is, for example, a compound obtained by ring-opening the above-mentioned cyclic ether compound. Any appropriate method may be used as a ring-opening method for a cyclic ether compound.

Any appropriate epoxies each having an epoxy group in the molecule may be used as the above-mentioned epoxies. Examples of the above-mentioned epoxies include epoxy-based resins including: bisphenol types such as a bisphenol A type, a bisphenol F type, a bisphenol S type, and a hydrogenated product thereof; novolac types such as a phenol novolac type and a cresol novolac type; nitrogen-containing ring types such as a triglycidyl isocyanurate type and a hydantoin type; alicyclic types; aliphatic types; aromatic types such as a naphthalene type and a biphenyl type;

glycidyl types such as a glycidyl ether type, a glycidyl amine type, and a glycidyl ester type; dicyclo types such as a dicyclopentadiene type; ester types; ether ester types; and modified types thereof. Those epoxy-based resins may be used alone or in combination. It is preferred that the above-mentioned epoxies be a bisphenol A type epoxy-based resin, an alicyclic type epoxy-based resin, a nitrogen-containing ring type epoxy-based resin, or a glycidyl type epoxy-based resin. Further, the epoxy-based prepolymer disclosed in JP 2008-107510 A may also be used.

The above-mentioned oxetanes are each preferably a compound represented by the following general formula (I), (II), or (III).

[Chem. 1]

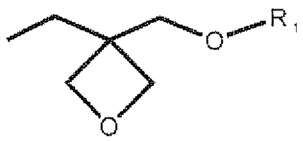

・・・(I)

In the above-mentioned formula (I), $R_1$ represents a hydrogen atom, a cycloalkyl group, a phenyl group, a naphthyl group, or an alkyl group having 1 to 10 carbon atoms.

[Chem. 2]

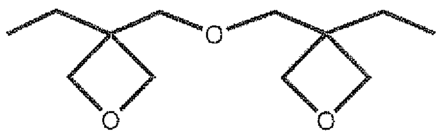

・・・(II)

[Chem. 3]

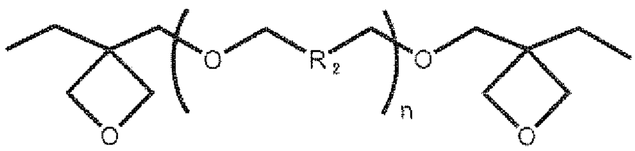

・・・(III)

In the above-mentioned formula (III), $R_2$ represents a cycloalkyl group, a phenyl group, a naphthyl group, or an alkyl group having 1 to 10 carbon atoms. n represents an integer of 1 to 5.

Examples of the above-mentioned oxetanes include 3-ethyl-3-hydroxymethyloxetane (oxetane alcohol), 2-ethylhexyloxetane, xylylenebisoxetane, and 3-ethyl-3{[(3-ethyloxetan-3-yl)methoxy]methyl}oxetane.

A commercially available cyclic ether compound and/or compound obtained by ring-opening a cyclic moiety of a cyclic ether compound may be used as the above-mentioned cyclic ether compound and/or compound obtained by ring-opening a cyclic moiety of a cyclic ether compound. Examples of the commercially available cyclic ether compound and/or compound obtained by ring-opening a cyclic moiety of a cyclic ether compound include ARON OXETANE OXT-221 manufactured by Toagosei Co., Ltd., Celloxide 2021P and EHPE3150 manufactured by DAICEL CHEMICAL INDUSTRIES, LTD., and Epiclon HP4032 manufactured by DIC Corporation.

The addition amount of the above-mentioned imidazole is preferably 0.5 part by weight to 5 parts by weight, more preferably 1 part by weight to 4 parts by weight with respect to 100 parts by weight of the above-mentioned first thermoplastic resin having a hydroxy group at the terminal. The content of the cyclic ether compound and/or the compound obtained by ring-opening a cyclic moiety of a cyclic ether compound is preferably 5 parts by weight to 50 parts by weight, more preferably 5 parts by weight to 30 parts by weight, even more preferably 5 parts by weight to 20 parts by weight with respect to 100 parts by weight of the above-mentioned first thermoplastic resin having a hydroxy group at the terminal. The content of the cyclic ether compound and/or the compound obtained by ring-opening a cyclic moiety of a cyclic ether compound may be set to fall within the above-mentioned range to suppress the coloration of a resin layer derived from the cyclic ether under heating.

D. Epoxy group-terminated coupling agent layer

In one embodiment, the transparent substrate of the present invention includes an epoxy group-terminated coupling agent layer between the above-mentioned resin layer and the above-mentioned inorganic glass. The epoxy group-terminated coupling agent layer is suitably used in the case where the above-mentioned resin layer has no coupling agent (for example, in the case of an embodiment as illustrated in FIG. **1(a)**). It is more preferred that the above-mentioned epoxy group-terminated coupling agent layer be directly placed on the above-mentioned inorganic glass.

The above-mentioned epoxy group-terminated coupling agent layer is obtained by subjecting the above-mentioned inorganic glass to coupling treatment with an epoxy group-terminated coupling agent. The above-mentioned epoxy group-terminated coupling agent layer is excellent in adhesiveness to the above-mentioned resin layer. This is presumably because an epoxy group in the above-mentioned epoxy group-terminated coupling agent may form a chemical bond with or interact with the above-mentioned thermoplastic resin having a hydroxy group at the terminal. Further, a silyl group in the above-mentioned epoxy group-terminated coupling agent may form a chemical bond with a substituent (for example, a hydroxy group) possessed by the above-mentioned inorganic glass. Hence, the above-mentioned epoxy group-terminated coupling agent layer is also excellent in adhesiveness to the above-mentioned inorganic glass.

Specific examples of the epoxy group-terminated coupling agent to be used in the above-mentioned epoxy group-terminated coupling agent layer include the epoxy group-terminated coupling agent described in the section C-2-1.

The above-mentioned epoxy group-terminated coupling agent layer has a thickness of preferably 0.001 μm to 10 μm, more preferably 0.001 μm to 2 μm.

E. Other layers

The above-mentioned transparent substrate may include any appropriate other layer as an outermost layer, if required. Examples of the above-mentioned other layer include a hard coat layer and a transparent conductive layer.

The above-mentioned hard coat layer has functions of imparting chemical resistance, mar resistance, and surface smoothness to the above-mentioned transparent substrate.

Any appropriate material may be employed as a material for forming the above-mentioned hard coat layer. Examples of the material for forming the above-mentioned hard coat layer include an epoxy-based resin, an acrylic resin, a silicone-based resin, and a mixture thereof. Of those, an epoxy-based resin excellent inheat resistance is preferred. The above-mentioned hard coat layer may be obtained by curing each of those resins with heat or active energy rays.

The above-mentioned transparent conductive layer may function as an electrode or an electromagnetic wave shield.

A material which may be used in the abode-mentioned transparent conductive layer is: a metal such as copper or silver; a metal oxide such as indium tin oxide (ITO) or indium zinc oxide (IZO); a conductive polymer such as polythiophene or polyaniline; a composition including carbon nanotubes; or the like.

F. Manufacturing method for transparent substrate

A manufacturing method for a transparent substrate of the present invention is, for example, a manufacturing method (1) including the steps of: subjecting a surface of the above-mentioned inorganic glass to coupling treatment with an epoxy group-terminated coupling agent; and applying a solution including the above-mentioned thermoplastic resin having a hydroxy group at the terminal onto the surface of the above-mentioned inorganic glass thus subjected to the coupling treatment to form a resin layer, or a manufacturing method (2) including the steps of: directly applying the above-mentioned first casting solution onto a surface of the above-mentioned inorganic glass to form a first thermoplastic resin layer; and directly applying the above-mentioned second casting solution onto the first thermoplastic resin layer to form a second thermoplastic resin layer.

F-1. Manufacturing method (1)

Any appropriate method may be employed as a method for the above-mentioned coupling treatment. Specific examples thereof include a method including: applying a solution of the above-mentioned epoxy group-terminated coupling agent onto a surface of the above-mentioned inorganic glass; and then carrying out heat treatment.

Any appropriate solvent which does not react with the epoxy group-terminated coupling agent may be used as a solvent to be used in the preparation of a solution of the above-mentioned epoxy group-terminated coupling agent. Examples of the solvent include: aliphatic hydrocarbon-based solvents such as hexane and hexadecane; aromatic solvents such as benzene, toluene, and xylene; halogen hydrocarbon-based solvents such as methylene chloride and 1,1,2-trichloroethane; ether-based solvents such as tetrahydrofuran and 1,4-dioxane; alcohol-based solvents such as

methanol and propanol; ketone-based solvents such as acetone and 2-butanone; and water.

Any appropriate method for heat treatment maybe employed as a method for heat treatment during the above-mentioned coupling treatment. Typically, a heat treatment temperature is 50°C to 150°C and a heat treatment time is 1 minute to 20 minutes. The heat treatment allows the epoxy group-terminated coupling agent to be bonded to the inorganic glass surface through a chemical bond.

Examples of the solvent to be used in the application step in the above-mentioned manufacturing method (1) include a ketone-based solvent, a halogen-based solvent, an aromatic solvent, a high-polar solvent, and a mixture thereof. Examples of the ketone-based solvent include methyl ethyl ketone, methyl isobutyl ketone, cyclopentanone, and cyclohexanone. Examples of the halogen-based solvent include methylene chloride, ethylene chloride, chloroform, carbon tetrachloride, and trichloroethane. Examples of the aromatic solvent include toluene, xylene, benzene, and phenol. Examples of the high-polar solvent include dimethylsulfoxide, N-methylpyrrolidone, dimethylformamide, and ethyl acetoacetate.

An application method for a solution including the above-mentioned thermoplastic resin having a hydroxy group at the terminal is exemplified by: coating methods such as air doctor coating, blade coating, knife coating, reverse coating, transfer roll coating, gravure roll coating, kiss coating, cast coating, spray coating, slot orifice coating, calender coating, electrodeposition coating, dip coating, and die coating; and printing methods including letterpress printing methods such as flexographic printing, intaglio printing methods such as a direct gravure printing method and an offset gravure printing method, planographic printing methods such as an offset printing method, and stencil printing methods such as a screen printing method.

In the above-mentioned manufacturing method (1), the above-mentioned resin layer is preferably obtained by applying a solution including the above-mentioned thermoplastic resin having a hydroxy group at the terminal and then drying the applied layer. Any appropriate method for drying (for example, natural drying, forced-air drying, or heat drying) may be employed as a method for the drying. For example, in the case of heat drying, a drying temperature is typically 100°C to 200°C and a drying time is typically 1 minute to 30 minutes. The epoxy group-terminated coupling agent and the thermoplastic resin having a hydroxy group at the terminal may be subjected to a reaction during the drying.

F-2. Manufacturing method (2)

A forming method for the first thermoplastic resin layer in the above-mentioned manufacturing method (2) includes the steps of : applying a first casting solution including a first thermoplastic resin having a hydroxy group at the terminal and an epoxy group-terminated coupling agent onto one side or both sides of an inorganic glass to form an applied layer; drying the applied layer; and heat-treating the applied layer after the drying. It is preferred that the first casting solution further include a cyclic ether compound and/or a compound obtained by ring-opening a cyclic moiety of a cyclic ether compound. The contents of the first thermoplastic resin having a hydroxy group at the terminal, the epoxy group-terminated coupling agent, and the cyclic ether compound and/or the compound obtained by ring-opening a cyclic moiety of a cyclic ether compound in the first casting solution are as described above.

An application solvent to be used in the application step of the first casting solution described above may be the same solvent as in the application step in the above-mentioned manufacturing method (1).

The same method as in the above-mentioned manufacturing method (1) maybe used as an application method for the above-mentioned first casting solution.

The above-mentioned first thermoplastic resin layer is preferably obtained by applying a first casting solution and then drying the applied layer. Any appropriate method for drying (for example, natural drying, forced-air drying, or heat drying) may be employed as a method for the drying. For example, in the case of heat drying, a drying temperature is typically 100°C to 200°C and a drying time is typically 1 to 30 minutes. The epoxy group-terminated coupling agent and the first thermoplastic resin having a hydroxy group at the terminal may be subjected to a reaction during the drying.

Any appropriate method for heat treatment may be employed as a method for heat treatment of the above-mentioned first thermoplastic resin layer. Typically, a heat treatment temperature is 50°C to 180°C and a heat treatment time is 1 to 20 minutes. The heat treatment allows the epoxy group-terminated coupling agent to be bonded to the inorganic glass surface through a chemical bond.

Next, a second thermoplastic resin layer is formed by directly applying a second casting solution onto the first thermoplastic resin layer formed by the above-mentioned method. The second thermoplastic resin layer may be formed using the same method as the forming method for the first thermoplastic resin layer described above. Specifically, a forming method for the second thermoplastic resin layer includes the steps of: applying a second casting solution including a second thermoplastic resin onto a first thermoplastic resin layer to form an applied layer; and drying the applied layer. The application step is the same as described above and hence the detailed description thereof is omitted.

Any appropriate method for drying (for example, natural drying, forced-air drying, or heat drying) may be employed as a method for the drying of the above-mentioned second thermoplastic resin layer. For example, in the case of heat drying, a drying temperature is typically 80°C to 150°C and a drying time is typically 1 to 30 minutes.

The above-mentioned manufacturing method (2) preferably includes the steps of: further drying the first thermoplastic resin layer and second thermoplastic resin layer formed, that is, the resin layer; and heat-treating the resin layer after the drying. The method includes those steps and thus can provide a stronger chemical bond or interaction among the inorganic glass, the first thermoplastic resin layer, and the second thermoplastic resin layer. Any appropriate method as described above may be employed as a method for the drying. In the case of a method for heat drying, a drying temperature is typically 100°C to 200°C and a drying time is typically 1 to 30 minutes. Any appropriate method for heat treatment may be employed as a method for the heat treatment. Typically, a heat treatment temperature is 50°C to 180°C and a heat treatment time is 1 to 20 minutes.

G. Applications

The transparent substrate of the present invention may be used for any appropriate display element, solar cell, or illumination element. Examples of the display element include a liquid crystal display, a plasma display, an organic EL display, and electronic paper. The illumination element is, for example, an organic EL element.

Examples

Hereinafter, the present invention is described specifically by way of examples. However, the present invention is not limited to those examples. It should be noted that a thickness was measured using a digital micrometer "KC-351C type" manufactured by Anritsu Corporation.

Example 1

36.2 g of polyethersulfone a terminal of which had been modified with a hydroxy group (terminal hydroxy group content: 1.6 terminal hydroxy groups with respect to 100 polymerization units on average) (SUMIKAEXCEL 5003P: manufactured by Sumitomo Chemical Co. , Ltd.) were dissolved in a mixed solvent of 172 g of cyclopentanone and 10.8 g of N,N-dimethylformamide to afford a 16.5 wt% solution. In addition, to 30 g of the solvent were added 0.15 g of 2-methylimidazole, 0.25 g of 3,4-epoxycyclohexenylmethyl-3',4'-epoxycyclohexene carboxylate (Celloxide 2021: manufactured by DAICEL CHEMICAL INDUSTRIES, LTD.), and 0.2 g of 3-ethyl-3{[(3-ethyloxetan-3-yl)methoxy]methyl}oxetane (ARON OXETANE OXT-221: manufactured by Toagosei Co., Ltd.) to prepare a casting solution.
Separately, one surface of an inorganic glass measuring 50 μm thick by 10 cm long by 4 cm wide (D263: manufactured by SCHOTT AG) was washed with methyl ethyl ketone and then subjected to corona treatment. Subsequently, an epoxy group-terminated coupling agent (KBM-403: manufactured by Shin-Et su Chemical Co., Ltd.) was applied onto the one surface of the inorganic glass and then heat-treated at 110°C for 5 minutes. The above-mentioned casting solution was applied onto the surface of the above-mentioned inorganic glass thus subjected to the coupling treatment and dried at 150°C for 10 minutes and at 170°C for 20 minutes to form a resin layer.
The other surface of the above-mentioned inorganic glass was similarly treated. Thus, a transparent substrate (resin layer/epoxy group-terminated coupling agent layer/inorganic glass/epoxy group-terminated coupling agent layer/resin layer) having a total thickness of 120 μm was obtained.
It should be noted that the layers formed on both surfaces of the inorganic glass each measured 10 cm long by 3 cm wide and a portion measuring 10 cm long by 1 cm wide of the above-mentioned inorganic glass was exposed.

Example 2

A transparent substrate was obtained in the same manner as in Example 1 except that an epoxy group-terminated coupling agent (KBE-403: manufactured by Shin-Etsu Chemical Co., Ltd.) was used in place of the epoxy group-terminated coupling agent (KBM-403: manufactured by Shin-Etsu Chemical Co., Ltd.).

Example 3

A transparent substrate was obtained in the same manner as in Example 1 except that polyethersulfone was mixed with 3.62 g of polyarylate (M-1000: manufactured by Unitika, Ltd.).

Example 4

36.2 g of polyethersulfone a terminal of which had been modified with a hydroxy group (terminal hydroxy group content: 1.6 terminal hydroxy groups with respect to 100 polymerization units on average) (SUMIKAEXCEL 5003P: manufactured by Sumitomo Chemical Co. , Ltd.) were dissolved in a mixed solvent of 172 g of cyclopentanone and 10.8

g of N,N-dimethylformamide to afford a 16.5 wt% solution of polyethersulfone having a hydroxy group at the terminal. To the resultant solution were added 0.027 g of a leveling agent (BYK 307: manufactured by BYK-Chemie GmbH), 1.81 g of 3,4-epoxycyclohexenylmethyl-3',4'-epoxycyclohexene carboxylate (Celloxide 2021P: manufactured by DAICEL Chemical INDUSTRIES, LTD.), 1.45 g of 3-ethyl-3{[(3-ethyloxetan-3-yl)methoxy]methyl}oxetane (ARON OXETANE OXT-221: manufactured by Toagosei Co., Ltd.), 1.09 g of 2-methylimidazole, and 9.05 g of an epoxy group-terminated coupling agent (KBM-403: manufactured by Shin-Etsu Chemical Co., Ltd.) to afford a first casting solution.
One surface of an inorganic glass measuring 50 μm thick by 10 cm long by 4 cm wide (D263: manufactured by SCHOTT AG) was washed with methyl ethyl ketone and subjected to corona treatment. The above-mentioned first casting solution was applied onto the surface, dried at 100°C for 10 minutes, and further heat-treated at 170°C for 20 minutes to form a first thermoplastic resin layer having a thickness of 1 μm. The other surface was similarly treated to form a first thermoplastic resin layer.
90 g of polyarylate (M-4000: manufactured by Unitika, Ltd.) were dissolved in 600 g of cyclopentanone to afford a second casting solution. The resultant second casting solution was applied onto the above-mentioned first thermoplastic resin layer on one surface and dried at 90°C for 15 minutes. In addition, the second casting solution was also applied onto the first thermoplastic resin layer on the other surface and dried at 85°C for 10 minutes. Next, both surfaces were dried at 130°C for 10 minutes and further heat-treated at 170°C for 20 minutes to form second thermoplastic resin layers each having a thickness of 36.5 μm. Thus, a transparent substrate (second thermoplastic resin layer/first thermoplastic resin layer/inorganic glass/first thermoplastic resin layer/second thermoplastic resin layer) having a total thickness of 125 μm was obtained.
It should be noted that the layers formed on both surfaces of the inorganic glass each measured 10 cm long by 3 cm wide and a portion measuring 10 cm long by 1 cm wide of the above-mentioned inorganic glass was exposed.

Example 5

A transparent substrate having a total thickness of 125 μm was obtained in the same manner as in Example 4 except that Polyarylate 2 (U-100: manufactured by Unitika, Ltd.) was used in place of Polyarylate 1 (M-4000: manufactured by Unitika, Ltd.).

Example 6

A transparent substrate having a total thickness of 143 μm was obtained in the same manner as in Example 4 except that the thickness of each of the first thermoplastic resin layers was set to 10 μm.

(Comparative Example 1)

A transparent substrate was obtained in the same manner as in Example 1 except that no epoxy group-terminated coupling agent was used.

(Comparative Example 2)

A transparent substrate was obtained in the same manner as in Example 1 except that polyethersulfone no terminal of which had been modified with a hydroxy group (SUMIKAEXCEL 5200P: manufactured by Sumitomo Chemical Co., Ltd.) was used in place of the polyethersulfone a terminal of which had been modified with a hydroxy group (SUMIKAEXCEL 5003P: manufactured by Sumitomo Chemical Co., Ltd.).

(Comparative Example 3)

A transparent substrate was obtained in the same manner as in Example 1 except that an amino group-terminated coupling agent (KBM-603: manufactured by Shin-Etsu Chemical Co., Ltd.) was used in place of the epoxy group-terminated coupling agent (KBM-403: manufactured by Shin-Etsu Chemical Co., Ltd.).

(Comparative Example 4)

One surface of an inorganic glass measuring 50 μm thick by 10 cm long by 4 cm wide (D263: manufactured by SCHOTT AG) was washed with methyl ethyl ketone and subjected to corona treatment. Subsequently, an epoxy group-containing coupling agent (KBM-403: manufactured by Shin-Etsu Chemical Co., Ltd.) was applied onto the one surface of the inorganic glass and then heat-treated at 110°C for 5 minutes. An epoxy resin (Celloxide 2021p: manufactured by DAICEL CHEMICAL INDUSTRIES, LTD.) supplemented with a photocationic curing agent (SP-170: manufactured by ADEKA CORPORATION) was applied onto the surface of the above-mentioned inorganic glass thus subjected to the coupling treatment and cured with UV light (wavelength: 365 nm, cumulative light quantity: 300 mJ/$cm^2$ or more). The other surface of the inorganic glass was similarly treated. After that, unreacted components were allowed to react by heat treatment at 150°C for 30 minutes. Thus, a transparent substrate (epoxy resin layer/epoxy group-containing coupling agent layer/inorganic glass/epoxy group-containing coupling agent layer/epoxy resin layer) having a total thickness of 120 μm was obtained.
It should be noted that the layers formed on both surfaces of the inorganic glass each measured 10 cm long by 3 cm wide and a portion measuring 10 cm long by 1 cm wide of the above-mentioned inorganic glass was exposed.

(Comparative Example 5)

One surface of an inorganic glass measuring 50 μm thick by 10 cm long by 4 cm wide (D263: manufactured by SCHOTT AG) was washed with methyl ethyl ketone. After that, PET, to which an acrylic pressure-sensitive adhesive had been transferred, was attached to the inorganic glass so that an acrylic pressure-sensitive adhesive surface came into contact with the inorganic glass. The other surface of the inorganic glass was similarly treated. Thus, a transparent substrate (PET layer/acrylic pressure-sensitive adhesive/inorganic glass/acrylic pressure-sensitive adhesive/PET layer) having a total thickness of 146 μm was obtained.
It should be noted that the layers formed on both surfaces of the inorganic glass were each formed so as to measure 10 cm long by 3 cm wide and a portion measuring 10 cm long by 1 cm wide of the above-mentioned inorganic glass was exposed.

(Comparative Example 6)

A transparent substrate having a total thickness of 125 μm was obtained in the same manner as in Example 4 except that polyethersulfone having no hydroxy group at the terminal (SUMIKAEXCEL 5200P: manufactured by Sumitomo Chemical Co., Ltd.) was used in place of the polyethersulfone having a hydroxy group at the terminal (SUMIKAEXCEL 5003P: manufactured by Sumitomo Chemical Co., Ltd.).

(Comparative Example 7)

A transparent substrate having a total thickness of 125 μm was obtained in the same manner as in Example 4 except that an amino group-containing coupling agent (KBM 603 : manufactured by Shin-Etsu Chemical Co., Ltd.) was used in place of the epoxy group-terminated coupling agent (KBM 403: manufactured by Shin-Etsu Chemical Co., Ltd.)

(Reference Example 1)

90 g of polyarylate (M-4000: manufactured by UNITIKA, LTD.) were dissolved in 600 g of methylene chloride. To the solution was further added 0.0675 g of a leveling agent (BYK307: manufactured by BYK-Chemie GmbH) to afford a casting solution.
One surface of an inorganic glass (50 μm thick by 10 cm long by 4 cm wide) was washed with methyl ethyl ketone and then subjected to corona treatment. An amino group-containing coupling agent (KBM-603: manufactured by Shin-Etsu Chemical Co., Ltd.) was applied onto the surface and dried at 110°C for 10 minutes. The above-mentioned casting solution was applied onto the inorganic glass thus subjected to the coupling treatment and dried at 40°C for 15 minutes. The other surface was similarly subjected to coupling treatment. The above-mentioned casting solution was applied onto the surface and dried at 40°C for 10 minutes. Next, both surfaces were dried at 60°C for 10 minutes and at 110°C for 20 minutes and then heat-treated at 200°C for 20 minutes. Thus, a transparent substrate (polyarylate layer/amino group-containing coupling agent layer/inorganic glass/amino group-containing coupling agent layer/polyarylate layer) having a total thickness of 125 μm was obtained.
It should be noted that the layers formed on both surfaces of the inorganic glass each measured 10 cm long by 3 cm wide and a portion measuring 10 cm long by 1 cm wide of the above-mentioned inorganic glass was exposed.

<Evaluation>

Each of the transparent substrates obtained above was evaluated by the following methods. Table 1 and Table 2 show the results.

(1) Adhesiveness test A

An evaluation was carried out by a cross-cut peeling test according to JIS K 5400. More specifically, 100 cross-cuts were prepared by cross-cutting a square region measuring 10 mm by 10 mm on the surface of one outermost layer of each of the resultant transparent substrates with a cutter at an interval of 1 mm. A pressure-sensitive adhesive tape was attached onto the cross-cuts and then peeled off. Adhesiveness was evaluated based on the number of resin layer cross-cuts peeled off from the inorganic glass.
It should be noted that the transparent substrate was evaluated as "o" when the number of the peeled resin layer cross-cuts was 0 and evaluated as "x" when the number of the peeled resin layer cross-cuts was 1 or more in Examples 4 to 6, Comparative Examples 6 and 7, and Reference Example 1.

(2) Adhesiveness test B

The transparent substrates obtained in Examples, Comparative Examples, and Reference Example were placed under an environment of a temperature of 60°C and a humidity of 90% for 500 hours. Each of the transparent substrates after 500 hours was evaluated for its adhesiveness by the cross-cut peeling test according to JIS K 5400 in the same manner as in the above-mentioned adhesiveness test A.
The transparent substrate was evaluated as "o" when the number of the peeled resin layer cross-cuts was 0 and evaluated as "x" when the number of the peeled resin layer cross-cuts was 1 or more.

(3) Rupture diameter

(a) The transparent substrates obtained above were prepared as samples for evaluation.
(b) A crack measuring 5 mm or less was produced at the center of a longitudinal side end of the exposed portion of each inorganic glass.
(c) The longitudinal side of each sample for evaluation was bent, and the diameter of a circle using the longitudinal side as its circumference at the time when the crack progressed in the exposed portion of the inorganic glass and further progressed by 1 cm in a laminate region of a resin and the like was defined as a rupture diameter.

(4) Haze

Each of the transparent substrates obtained above was measured for its haze value using a hazemeter "HM-150"manufactured by Murakami Color Research Laboratory Co., Ltd. according to JIS K7136.
Each of the outermost layers of the transparent substrates obtained above (resin layers of Examples 1 to 3 and Comparative Examples 1 to 3, second thermoplastic resin layers of Examples 4 to 6 and Comparative Examples 6 and 7, epoxy resin layers of Comparative Example 4, PET layers of Comparative Example 5, and polyarylate layers of Reference Example 1) was evaluated for its modulus of elasticity by the following method. Table 1 and Table 2 show the results.

(5) Modulus of elasticity

A modulus of elasticity was measured by single indentation measurement for a hard coat layer (indenter: Berkovich (triangular pyramid shape), indentation depth: 230 nm to 280 nm) using a "Tribo Indenter" (product name) manufactured by Hysitron.
Each of resins for forming the outermost layers of the transparent substrates obtained above was evaluated for its fracture toughness value and glass transition temperature (Tg) by the following methods. Table 1 and Table 2 show the results.

(6) Fracture toughness value

A strip of a resin sample measuring 50 μm thick by 2 cm wide by 15 cm long was produced and a crack (5 mm) was produced at the end (central portion) in a lengthwise direction of the strip. A tensile stress was applied in a lengthwise direction of the strip with an AUTOGRAPH (AG-I: manufactured by Shimadzu Corporation) to measure a stress at the time of the rupture of the resin from the crack. The test was carried out under the conditions of a chuck-to-chuck distance of 10 cm and a tension speed of 10 mm/min. A fracture toughness value $K_{IC}$ at the time of the rupture was determined by substituting the resultant tensile stress $\sigma$ at the time of the rupture, a crack length a, and a sample

width b into the following equation ("Fracture Studies on Ceramics " published by UCHIDA ROKAKUHO PUBLISHING CO., LTD., written by Akira Okada, P. 68 to 70).

[Math. 1]

$$K_{IC}=\sigma(\pi a)^{1/2}F(a/b)$$

$$F(a/b)=1.12-0.231(a/b)+10.55(a/b)^2-21.72(a/b)^3+30.39(a/b)^4$$

(7) Glass transition temperature (Tg)

A glass transition temperature was evaluated from the inflexion point of the peak using a differential scanning calorimeter (DSC).

[Table 1]

| | Adhesiveness test A (number of peeled resin layer cross-cuts (piece(s)) | Rupture diameter (mm ) | Modulus of elasticity (GPa) | Fracture toughness value ($MPa\cdot m^{1/2}$) | Tg (°C) |
|---|---|---|---|---|---|
| Example 1 | 0 | 23 | 2.3 | 4.1 | 228 |
| Example 2 | 0 | 23 | 2.3 | 4.1 | 228 |
| Example 3 | 0 | 23 | 2.3 | 4.1 | 232 |
| Comparative Example 1 | 100 | -1) - | 2.3 | 4.1 | 228 |
| Comparative Example 2 | 100 | -1) | 2.3 | 4.2 | 228 |
| Comparative Example 3 | 100 | -1) | 2.3 | 4.1 | 228 |
| Comparative Example 4 | 0 | 90 | 1.9 | 0.4 | -2) |
| Comparative Example 5 | 0 | 120 | 4.9 | 9.2 | 70 |
| 1) Unmeasurable because the sample for evaluation was fractured<br>2) No clear Tg | | | | | |

[Table 2]

| | Adhesiveness test A | Adhesiveness test B | Rupture diameter (mm) | Haze (%) | Modulus of elasticity (GPa) | Fracture toughness value $MPa\cdot m^{1/2}$) | Tg (°C) |
|---|---|---|---|---|---|---|---|
| Example 4 | o | o | 23 | 0.6 | 2 | 3.2 | 240 |
| Example 5 | o | o | 23 | 1 | 1.8 | 3.2 | 193 |
| Example 6 | o | o | 23 | 10 | 2 | 3.2 | 240 |

(continued)

| | Adhesiveness test A | Adhesiveness test B | Rupture diameter (mm) | Haze (%) | Modulus of elasticity (GPa) | Fracture toughness value MPa·m$^{1/2}$) | Tg (°C) |
|---|---|---|---|---|---|---|---|
| Comparative Example 6 | × | -3) | -4) | -4) | 2 | 3.2 | 240 |
| Comparative Example 7 | × | -3) | -4) | -4) | 2 | 3.2 | 240 |
| Reference Example 1 | o | × | -4) | -4) | 2 | 3.2 | 240 |
| 3) Unmeasurable because the inorganic glass and the resin layer were peeled off from each other under an ordinary environment<br>4) Unmeasurable because the sample for evaluation was fractured | | | | | | | |

As is clear from Table 1 and Table 2, the transparent substrates of Examples 1 to 6, each of which is obtained by using an epoxy group-terminated coupling agent and a thermoplastic resin having a hydroxy group at the terminal in combination, are each excellent in adhesiveness between an inorganic glass and a resin layer. Further, a resin layer derived from a thermoplastic resin having a hydroxy group at the terminal may be used to provide a transparent substrate which is small in rupture diameter and high in modulus of elasticity and fracture toughness value. Those results suggest that the transparent substrate of the present invention is excellent in bending property, flexibility, and impact resistance and can significantly prevent the progress of a crack in a glass.

Further, the transparent substrates of Examples 4 to 6 were each excellent in adhesiveness between an inorganic glass and a resin layer even after having been placed under a high-temperature and high-humidity (temperature: 60°C, humidity: 90%) environment for 500 hours. In addition, a haze value was also suppressed.

Industrial Applicability

The transparent substrate of the present invention may be used in a display element, a solar cell, or an illumination element. Examples of the display element include a liquid crystal display, a plasma display, an organic EL display, and electronic paper. The illumination element is, for example, an organic EL element.

Reference Signs List

**1, 1'** first thermoplastic resin layer
**2, 2'** second thermoplastic resin layer
**10** inorganic glass
**11, 11', 21, 21'** resin layer
**12, 12'** epoxy group-terminated coupling agent layer
**100, 200** transparent substrate

## Claims

**1.** A transparent substrate, comprising:

an inorganic glass; and
a resin layer, which is obtained by applying a solution of a thermoplastic resin onto one side or both sides of the inorganic glass, wherein:

the solution comprises a first thermoplastic resin having a hydroxy group at a terminal;
the inorganic glass and the resin layer comprise an epoxy group-terminated coupling agent layer therebetween;

the coupling agent layer is directly formed on the inorganic glass; and
the resin layer is directly formed on the coupling agent layer.

**2.** A transparent substrate, comprising:

an inorganic glass;
a resin layer, which is obtained by applying a solution of a thermoplastic resin onto one side or both sides of the inorganic glass, wherein:

the resin layer comprises:

a first thermoplastic resin layer, which is obtained by applying a first casting solution comprising a first thermoplastic resin having a hydroxy group at a terminal and an epoxy group-terminated coupling agent onto the inorganic glass; and
a second thermoplastic resin layer, which is obtained by applying a second casting solution comprising a second thermoplastic resin onto the first thermoplastic resin layer.

**3.** A transparent substrate according to claim 1 or 2, wherein the hydroxy group comprises a phenolic hydroxy group.

**4.** A transparent substrate according to any one of claims 1 to 3, wherein the first thermoplastic resin having a hydroxy group at a terminal comprises a thermoplastic resin obtained by modifying a terminal of at least one kind selected from the group consisting of polyimide, polyamide-imide, polyethersulfone, polyetherimide, polysulfone, polyarylate, and polycarbonate with a hydroxy group.

**5.** A transparent substrate according to any one of claims 1 to 4, wherein the transparent substrate has a total thickness of 150 μm or less.

**6.** A transparent substrate according to any one of claims 1 to 5, wherein the inorganic glass has a thickness of 100 μm or less.

**7.** A transparent substrate according to any one of claims 1 to 6, wherein the first thermoplastic resin having a hydroxy group at a terminal has a glass transition temperature of 150°C to 350°C.

**8.** A transparent substrate according to any one of claims 1 to 7, wherein the first thermoplastic resin having a hydroxy group at a terminal has a weight average molecular weight of $2.0\times10^4$ to $150\times10^4$ in terms of polyethylene oxide.

**9.** A transparent substrate according to any one of claims 1 to 8, wherein the resin layer has a modulus of elasticity at 25°C of 1 GPa or more.

**10.** A transparent substrate according to any one of claims 1 to 9, wherein the resin layer has a fracture toughness value at 25°C of 1 $MPa\cdot m^{1/2}$ to 10 $MPa\cdot m^{1/2}$.

**11.** A transparent substrate according to any one of claims 1 to 10, wherein the transparent substrate has a rupture diameter, which is determined when the transparent substrate is cracked and bent, of 50 mm or less.

**12.** A transparent substrate according to claim 2, wherein a content of the epoxy group-terminated coupling agent is 10 parts by weight to 50 parts by weight with respect to 100 parts by weight of the first thermoplastic resin.

**13.** A transparent substrate according to any one of claims 2 to 12, wherein:

the first casting solution further comprises a cyclic ether compound and/or a compound obtained by ring-opening a cyclic moiety of a cyclic ether compound; and
a content of the cyclic ether compound and/or the compound obtained by ring-opening a cyclic moiety of a cyclic ether compound is 5 parts by weight to 50 parts by weight with respect to 100 parts by weight of the first thermoplastic resin.

**14.** A transparent substrate according to any one of claims 2 to 13, wherein the first thermoplastic resin layer has a thickness of 20 μm or less.

**15.** A transparent substrate according to any one of claims 2 to 14, wherein the second thermoplastic resin has a glass transition temperature of 150°C to 350°C.

**16.** A transparent substrate according to any one of claims 2 to 15, wherein the second thermoplastic resin layer has a modulus of elasticity at 25°C of 1.5 GPa to 10 GPa.

**17.** A transparent substrate according to any one of claims 2 to 16, wherein the second thermoplastic resin layer has a fracture toughness value at 25°C of 1.5 $MPa \cdot m^{1/2}$ to 10 $MPa \cdot m^{1/2}$.

**18.** A display element, which is produced using the transparent substrate according to any one of claims 1 to 17.

**19.** A solar cell, which is produced using the transparent substrate according to any one of claims 1 to 17.

**20.** An illumination element, which is produced using the transparent substrate according to any one of claims 1 to 17.

**21.** A manufacturing method for a transparent substrate, comprising the steps of:

subjecting a surface of an inorganic glass to coupling treatment with an epoxy group-terminated coupling agent; and

applying a solution comprising a thermoplastic resin having a hydroxy group at a terminal onto the surface of the inorganic glass thus subjected to the coupling treatment to form a resin layer.

FIG. 1

(a)

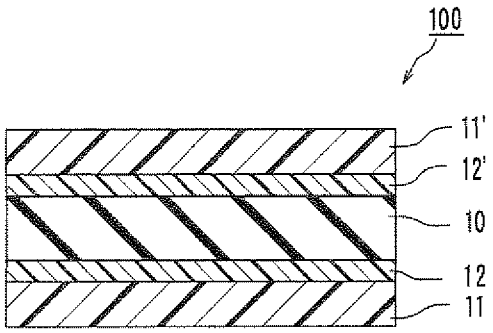


(b)

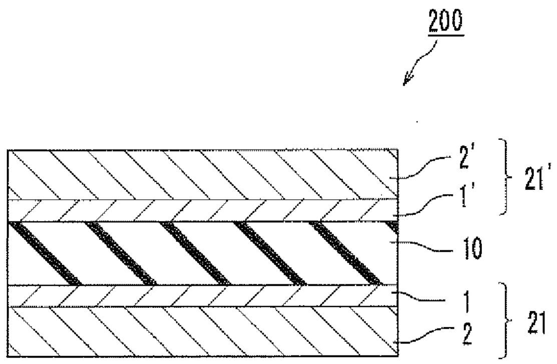

**INTERNATIONAL SEARCH REPORT**

International application No. PCT/JP2009/068830

A. CLASSIFICATION OF SUBJECT MATTER
*C03C17/34*(2006.01)i, *B32B17/04*(2006.01)i, *C03C17/32*(2006.01)i, *G09F9/30*(2006.01)i

According to International Patent Classification (IPC) or to both national classification and IPC

B. FIELDS SEARCHED

Minimum documentation searched (classification system followed by classification symbols)
C03C17/34, C03C15/00-23/00, G09F9/30

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br><br>A | JP 2008-107510 A (Nitto Denko Corp.), 08 May 2008 (08.05.2008), claims 1, 4, 6 to 8, 10; paragraphs [0001], [0002], [0060], [0061]; fig. 1 & WO 2008/050547 A1 & KR 10-2008-0069962 A & CN 101356558 A | 1,5,6,8-11, 18-21<br>2-4,7,12-17 |
| Y<br><br>A | JP 2003-53259 A (Nippon Paint Co., Ltd.), 25 February 2003 (25.02.2003), claim 1; paragraphs [0001], [0002], [0005] to [0010], [0015] (Family: none) | 1,5,6,8-11, 18-21<br>2-4,7,12-17 |

☐ Further documents are listed in the continuation of Box C. ☐ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 24 November, 2009 (24.11.09) | 08 December, 2009 (08.12.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 11329715 A
- JP 2008107510 A


### Non-patent literature cited in the description


- **Akira Okada, P.** Fracture Studies on Ceramics. UCHIDA ROKAKUHO PUBLISHING CO., LTD, 68-70